Europäisches Patentamt

European Patent Office

Office européen des brevets

(19)

(11) **EP 1 020 489 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.7: **C08J 5/22**, H01M 8/10, B01D 69/12

(21) Anmeldenummer: **00100633.7**

(22) Anmeldetag: **13.01.2000**

(54) **Polymerelektrolytmembran, insbesondere für Methanol-Brennstoffzellen und Verfahren zu deren Herstellung**

Polymer electrolyte membrane, especially for methanol-fuel cells and process for their production

Membrane d'electrolyte polymère notammant pour piles à combustible à méthanol et leur procédé de production

(84) Benannte Vertragsstaaten:
**CH DE GB IT LI NL**

(30) Priorität: **15.01.1999 DE 19901378**

(43) Veröffentlichungstag der Anmeldung:
**19.07.2000 Patentblatt 2000/29**

(73) Patentinhaber: **Fraunhofer-Gesellschaft zur Förderung der angewandten Forschung e.V. 80636 München (DE)**

(72) Erfinder:
- **Finsterwalder, Florian, Dipl.-Chem. 76227 Karlsruhe (DE)**
- **Hess, Dirk Frithjof, Dipl.-Ing. 75015 Bretten (DE)**

(56) Entgegenhaltungen:
EP-A- 0 113 574  US-A- 4 272 378
US-A- 4 533 369

- **DATABASE WPI Section Ch, Week 197846 Derwent Publications Ltd., London, GB; Class A91, AN 1978-82963A XP002138329 & JP 53 116286 A (TOKUYAMA SODA KK), 11. Oktober 1978 (1978-10-11)**
- **DATABASE WPI Section Ch, Week 198518 Derwent Publications Ltd., London, GB; Class A85, AN 1985-107595 XP002138330 & JP 60 051505 A (TOSHIBA KK), 23. März 1985 (1985-03-23)**

**Beschreibung**

Die Erfindung betrifft ein Verfahren zur Herstellung einer selektiv für Wasser bzw. $H_3O^+$-Ionen permeablen Polymerelektrolytmembran, insbesondere für Methanol-Brennstoffzellen, sowie eine solche Polymerelektrolytmembran.

Brennstoffzellen dienen zur Erzeugung elektrischer Energie durch Direktumwandlung chemischer Energie aus Oxidationsprozessen. Sie bestehen in der Regel aus zwei durch eine für den Brennstoff permeablen Membran getrennten Kammern mit jeweils einer Elektrode, wobei die Elektroden über einen Elektrolyt leitend in Verbindung stehen. Am bekanntesten sind Wasserstoff- und Methanol-Brennstoffzellen. Den beiden Kammern werden die zu öxidierende Substanz bzw. der Brennstoff und ein Oxidationsmittel in flüssiger oder gasförmiger Phase kontinuierlich zugeführt.

Bei der Direkt-Methanol-Brennstoffzelle werden als Brennstoff Methanol und als Oxidationsmittel Sauerstoff verwendet, wobei an der Anode Methanol zu Kohlendioxid oxidiert (vergl. Gleichung I) und an der Kathode Sauerstoff zu Wasser reduziert wird (vergl. Gleichung II).

$$CH_3OH + 7\ H_2O \longrightarrow CO_2 + 6\ H_3O^+ + 6\ e^- \qquad I$$

$$3/2\ O_2 + 6\ H_3O^+ + 6\ e^- \longrightarrow 9\ H_2O \qquad II$$

Hieraus resultiert als Gesamtreaktion:

$$CH_3OH + 3/2\ O_2 \longrightarrow CO_2 + 2\ H_2O \qquad III$$

Die Protonen bzw. $H_3O^+$-Ionen werden durch die Polymerelektrolytmembran transportiert und dadurch ein Stromfluß aufrechterhalten. Für solche Membranen werden in der Regel synthetische Polymere, z. B. Polyimide, Polybenzimidazole, oder dergleichen, insbesondere aber fluorierte oder perfluorierte Polysulfone verwendet.

Nachteilig bei den bekannten Methanol-Brennstoffzellen ist die Tatsache, daß aufgrund der Löslichkeit von Methanol in Wasser einerseits und des geringen Unterschieds im Moleküldurchmesser andererseits während des Betriebs der Brennstoffzelle nicht nur Wasser bzw. $H_3O^+$-Ionen, sondern auch Methanol durch die Membran permeiert, so daß die elektrolytische Trennung von Anoden- und Kathodenraum mit zunehmender Betriebsdauer abgebaut wird, was zu einem Spannungsabfall und somit zu einem Leistungsabfall der Brennstoffzelle aufgrund der Einstellung eines Mischpotentials an der Kathode führt.

Der Erfindung liegt die Aufgabe zugrunde, ein Verfahren zur Herstellung einer selektiv für Wasser bzw. $H_3O^+$-Ionen permeablen Polymerelektrolytmembran vorzuschlagen, welche Methanol im wesentlichen zurückhält. Sie ist ferner auf eine mittels eines derartigen Verfahrens hergestellte Polymerelektrolytmembran gerichtet.

Der verfahrenstechnische Teil dieser Aufgabe wird erfindungsgemäß dadurch gelöst, daß eine Polymerelektrolytmembran mittels Plasmapolymerisation mit einer dünnen Schicht aus einem vernetzten Polymer beschichtet wird und in die plasmapolymerisierte dünne Schicht zur Erhöhung ihrer Protonenleitfähigkeit acide Gruppen eingelagert werden.

Durch die Beschichtung der Membran, z.B. einer handelsüblichen Polymerelektrolytmembran aus perfluorierten Polysulfonen, wird deren Permeabilität für Methanol deutlich verringert, ohne die Permeabilität für Protonen bzw. $H_3O^+$-Ionen zu verringern. Während herkömmliche Polymerelektrolytmembranen eine Dicke zwischen 50 μm und 150 μm aufweisen, besitzt die mittels Plasmapolymerisation aufgebrachte dünne Schicht lediglich eine Dicke zwischen 100 nm und 1 μm, vorzugsweise zwischen 200 nm und 500 nm. Sie kann ein- oder beidseitig auf die Membran aufgebracht sein und zeichnet sich durch eine glatte Oberfläche und eine hohe Haftfestigkeit auf der Polymerbasis der Membran aus. Die Leistung einer mit der erfindungsgemäßen Polymerelektrolytmembran versehenen Brennstoffzelle bleibt über einen langen Zeitraum konstant, da die elektrolytische Trennung der Kammern der Brennstoffzelle erhalten bleibt und sich ein Mischpotential an der Kathode nicht einstellen kann.

Die in die plasmapolymerisierte dünne Schicht eingelagerten aciden Gruppen dienen einerseits zur Erhöhung der Protonenleitfähigkeit, andererseits zur Erhöhung der Hydrophilie der plasmapolymerisierten dünnen Schicht der erfindungsgemäßen Polymerelektrolytmembran. Durch die eingelagerten aciden Gruppen wird die Schicht ionenleitend, so daß der selektive Transport der Protonen bzw. $H_3O^+$-Ionen durch die Membran unterstützt wird.

In bevorzugter Ausführung ist vorgesehen, daß zur Erzeugung des Plasmas feste Mono-, Di-, Oligo- oder Polymere mittels durch Hochfrequenzenergie ionisierter Edelgase zerstäubt werden. Beispielsweise wird Argon mittels hochfrequenter elektromagnetischer Strahlung ionisiert und werden die entstehenden positiven Ionen durch eine Gitteranordnung extrahiert und beschleunigt. Sie treffen auf ein Target aus dem für die Beschichtung vorgesehenen Mono-, Di-, Oligo- oder Polymer. Die dabei freigesetzten Monomere oder Monomerfragmente repolymerisieren auf der Membran zu einem vernetzten Polymer, welches eine fest an der eingesetzten Polymerelektrolytmembran anhaftende dünne Schicht bildet, die deren Permeabilität für Methanol deutlich verringert. Alternativ können selbstverständlich auch flüssige oder gasförmige Mono-, Di- oder Oligomere zur Erzeugung des Plasmas verwendet werden.

Bevorzugt werden zur Erzeugung des Plasmas Fluor-Kohlenstoff-Verbindungen, insbesondere Fluorkohlenwasserstoffe, z.B. Mono-, Di-, Oligo- oder Polymere von Tetrafluorethen, wie Polytetrafluorethen (PTFE), oder organische Siliciumverbindungen, z.B. Hexamethyldisiloxan (HDMSO), Silicone oder dergleichen eingesetzt, wobei in letztgenanntem Fall ein Polysiloxan abgeschieden wird.

Die die Protonenleitfähigkeit und die Hydrophilie der plasmapolymerisierten dünnen Schicht erhöhenden aciden Gruppen werden bevorzugt während der Plasmapolymerisation in diese eingelagert, wobei vorzugsweise Sulfonsäuregruppen ($-SO_2$-OH) eingelagert werden. Alternativ oder zusätzlich können z.B. auch Phosphatgruppen in die plasmapolymerisierte Schicht eingelagert werden.

Eine vorteilhafte Ausführung sieht vor, daß flüssige oder gasförmige, acide Gruppen abspaltende Medien, z.B. ein Sulfonsäuregruppen abspaltendes Medium in flüssigem oder gasförmigen Zustand, in das Plasma eingebracht werden und sich die durch Abspaltung erhaltenen aciden Gruppen mit den bei der Plasmapolymerisation erhaltenen Monomer- oder Polymerfragmenten und/oder der Polymermatrix der auf der Polymerelektrolytmembran abgeschiedenen dünnen Schicht kovalent verbinden.

Hierzu sind beispielsweise Halogensulfonsäuren, insbesondere Chlorsulfonsäure, geeignet. Die Chlorsulfonsäure wird z.B. erhitzt und dampfförmig in einen Reaktor, in dem die Plasmapolymerisation durchgeführt wird, eingebracht, wobei sich die Säure unter Abspaltung von Chlor an die gebildete Polymermatrix der dünnen Schicht und/oder an Matrixfragmente des Plasmas unter Bildung von Sulfonsäuregruppen anlagert.

Stattdessen können auch acide Gruppen abspaltende, feste Medien, wie Metallsulfate und/oder -disulfate, insbesondere Alkalimetallsulfate und/oder -disulfate, in das Plasma eingebracht werden. Solche festen Medien können unmittelbar auf das feste Polymer zur Plasmaerzeugung aufgebracht werden, so daß sowohl letzteres als auch die Metallsulfate bei Anregung mit ionisierten Edelgasen zerstäubt werden. Aus dem Metallsulfat werden Schwefelsauerstoffverbindungen freigesetzt, die sich an die gebildete Polymermatrix der dünnen Schicht anlagern bzw. kovalent an diese binden, wobei insbesondere Sulfonsäuregruppen eingeführt werden, deren acides H-Atom durch das jeweilige Metall (Me) ersetzt ist. Zur Umwandlung der ($-SO_2$-OMe)-Gruppen in Sulfonsäuregruppen bzw. zur Substitution der Metallkationen durch Protonen kann die plasmapolymerisierte Schicht anschließend mit verdünnter Säure behandelt, beispielsweise in verdünnter Schwefelsäure gekocht werden.

Für den Fall, daß Phosphatgruppen als acide Gruppen in die plasmapolymerisierte dünne Schicht eingelagert werden, ist es beispielsweise auch möglich, das zur Plasmaerzeugung vorgesehene feste Polymer mit Ortho-, Meta- oder Polyphosphaten bzw. mit Meta-oder Polyphosphorsäure zu beschichten.

Untersuchungen haben gezeigt, daß die erfindungsgemäß durch Plasmapolymerisation beschichtete Polymerelektrolytmembran einen etwa um den Faktor 8 bis 10 geringeren Diffusionskoeffizienten für Methanol aufweist als die eingesetzte unbeschichtete Polymerelektrolytmembran.

Eine erfindungsgemäß ausgebildete, selektiv für Wasser bzw. $H_3O^+$-Ionen permeable Polymerelektrolytmembran zeichnet sich durch eine auf eine Polymerelektrolytmembran durch Plasmapolymerisation aufgebrachte dünne Schicht aus einem vernetzten Polymer mit in die plasmapolymerisierte dünne Schicht eingelagerten aciden Gruppen aus, wobei die Schichtdicke des vernetzten Polymers vorteilhaft zwischen 100 nm und 1 $\mu$m, vorzugsweise zwischen 200 nm und 500 nm beträgt. Die plasmapolymerisierte dünne Schicht besteht vorteilhafterweise aus Halogenkohlenwasserstoffen, vorzugsweise aus Fluor-Kohlenstoff-, insbesondere aus Fluor-Kohlenwasserstoff-Verbindungen, z. B. PTFE, oder Siliconen und weist kovalent gebundene Sulfonsäuregruppen auf.

Nachstehend ist die Erfindung anhand von Ausführungsbeispielen unter Bezugnahme auf die Zeichnungen näher erläutert. Es zeigen:

Fig. 1 eine schematische Ansicht einer ersten Ausführungsform des Verfahrens;

Fig. 2 eine schematische Ansicht einer zweiten Ausführungsform des Verfahrens und

Fig. 3 ein Diagramm zur Methanoldiffusion bei einer unbeschichteten und einer beschichteten Polymerelektrolytmembran.

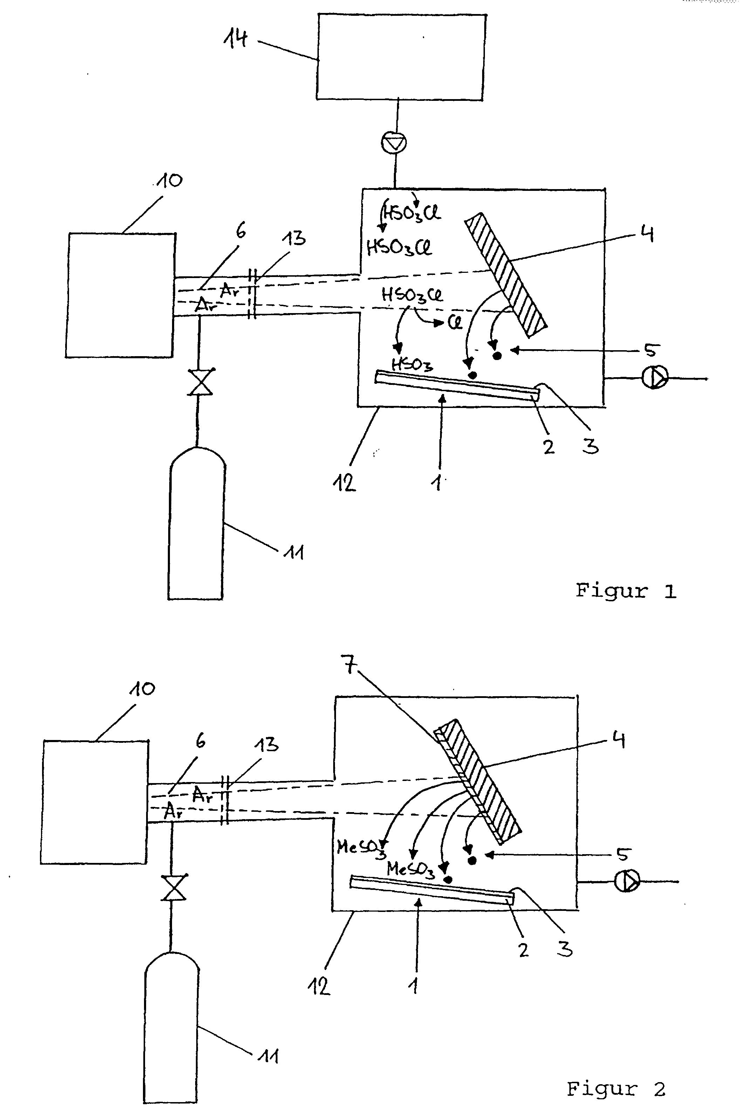

Bei den in Fig. 1 und 2 dargestellten Ausführungsformen wird eine für Methanol-Brennstoffzellen verwendete Polymerelektrolytmembran 2, z.B. eine handelsübliche Membran aus perfluoriertem Polysulfon, mittels Plasmapolymerisation mit einer dünnen Schicht 3 aus einem vernetzten Polymer beschichtet. Zur Plasmaerzeugung wird ein Edelgas 6, z.B. Argon, aus einem Druckbehälter 11 in ein durch einen Hochfrequenzgenerator 10 erzeugtes Feld eingespeist und ionisiert. Die positiven Argon-Ionen werden mittels einer mit einer Beschleunigungsspannung beaufschlagten Gitteranordnung 13 extrahiert und in einen Reaktor 12 beschleunigt, in welchem die Membran 2 angeordnet ist. In dem Reaktor ist ein Target aus einem festen Polymer 4, z.B. PTFE, angeordnet, das durch Aufprall des ionisierten Argons 6 zerstäubt wird. Die freigesetzten Monomere bzw. Monomerfragmente des Plasmas 5 repolymerisieren und lagern sich unter Bildung der dünnen Schicht 3 aus vernetztem PTFE auf der Polymerlektrolytmembran 2 an.

Um die Hydrophilie und insbesondere die Leitfähigkeit der plasmapolymerisierten Schicht 3 zu erhöhen, wird dem Reaktor 12 in der Ausführung gemäß Fig. 1 aus einem Reservoir 14 ein gasförmiges, acide Gruppen abspaltendes Medium, z.B. Chlorsulfonsäure, zugeführt, die bei den im Plasma 5 vorliegenden Reaktionsbedingungen bzw. bei Anregung durch die Argon-Ionen unter Abspaltung von Chlor Sulfonsäuregruppen freisetzt, welche an die Polymerfragmente des Plasmas bzw. an das Polymer der dünnen Schicht 3 kovalent gebunden werden. Die beschichtete Polymerelektrolytmembran 1 ist für Methanol im wesentlichen nicht permeabel, während sie aufgrund der hohen Protonenleitfähigkeit der Sulfonsäuregruppen insbesondere für $H_3O^+$-Ionen permeabel ist.

Die Ausführungsvariante gemäß Fig. 2 unterscheidet sich von der in Fig. 1 gezeigten Ausführung dadurch, daß zum Einführen von aciden Gruppen in die plasmapolymerisierte Schicht 3 Feststoffe 7, wie Alkalimetallsulfate oder -disulfate, z.B. Lithiumsulfat oder Kaliumdisulfat,, eingesetzt werden, die als Preßkörper auf das Target-Polymer 4 aufgesetzt sind. Sie werden wie das Polymer 4 bei Anregung mit ionisierten Edelgasen 6 zerstäubt. Aus dem Metallsulfat werden Schwefelsauerstoffverbindungen freigesetzt, die sich an das vernetzte Polymer der dünnen Schicht 3 anlagern bzw. kovalent an dieses binden. Bei den angelagerten $SO_2$-OMe-Gruppen wird das Alkalimetall (Me) durch ein Proton substituiert, indem die plasmapolymerisierte Schicht 3 mit verdünnter Säure behandelt, z.B. in verdünnter Schwefelsäure gekocht wird.

## Ausführungsbeispiel

Eine Polymerelektrolytmembran aus sulfoniertem PTFE weist eine Dicke von 100 μm auf. Die Membran wird nach dem Verfahren gemäß Fig. 2 beschichtet. Das Target besteht aus einem scheibenförmigen Festkörper aus PTFE, der auf seiner dem ionisierten Argonstrahl zugekehrten Seite mit einer Preßschicht aus Kaliumdisulfat belegt ist. Die Membran wird durch Plasmapolymerisation mit einer Schicht von 37 nm belegt. Elektronenmikroskopische Untersuchungen zeigen, daß die Schicht eine glatte, kompakte Oberfläche mit fester Haftung auf der Polymerbasis der Membran bildet.

Die Methanoldiffusion wird dadurch bestimmt, daß in zwei durch die Membran getrennten Kammern die zeitliche Änderung der Methanolkonzentration verfolgt wird. Die Wanderung des Methanols in die andere Kammer bzw. die dort stattfindende Methanolanreicherung läßt sich dann näherungsweise durch folgende Gleichung ermitteln:

$$x_{MrOH} = \frac{1}{2}(1-e^{-\frac{4AD}{Vd}t})$$

wobei

| | |
|---|---|
| $X_{MeOH}$ | Methanol Stoffmengenanteil in der anderen Kammer |
| A | Membranfläche |
| V | Gesamtvolumen der Zelle |
| D | Diffusionskoeffizient |
| t | Zeit. |

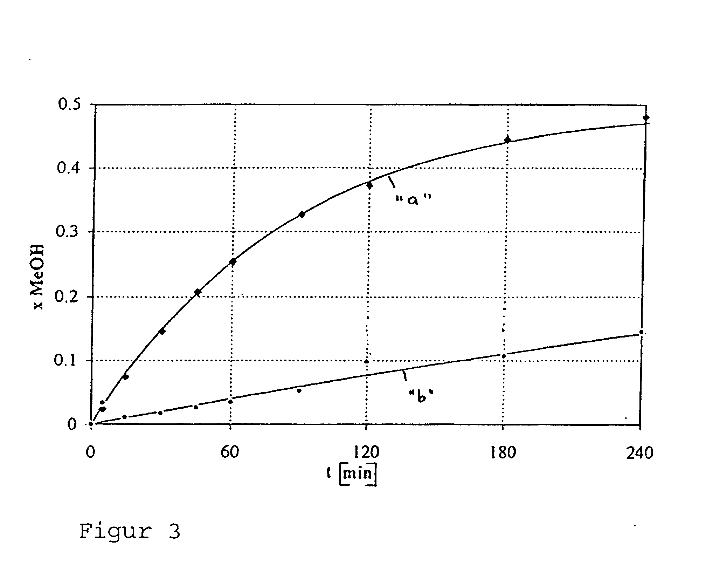

Fig. 3 zeigt die Methanolanreicherung $X_{MeOH}$ für eine unbeschichtete Polymerelektrolytmembran (Kurve "a") und für eine erfindungsgemäß beschichtete Polymerelektrolytmembran (Kurve "b"). Der Methanol-Diffusionskoeffizient der unbeschichteten Membran konnte durch die Beschichtung von $1{,}20 \cdot 10^{-6}cm^2s^{-1}$ um den Faktor 8,5 auf $1{,}42 \cdot 10^{-7}cm^2s^{-1}$ gesenkt werden.

## Patentansprüche

1. Verfahren zur Herstellung einer selektiv für Wasser bzw. $H_3O^+$-Ionen permeablen Polymerelektrolytmembran (1), insbesondere für Methanol-Brennstoffzellen, **dadurch gekennzeichnet, daß** eine Polymerelektrolytmembran (2) mittels Plasmapolymerisation mit einer dünnen Schicht (3) aus einem vernetzten Polymer beschichtet wird und in die plasmapolymerisierte dünne Schicht (3) zur Erhöhung ihrer Protonenleitfähigkeit acide Gruppen eingelagert werden.

2. Verfahren nach Anspruch 1, **dadurch gekennzeichnet, daß** zur Erzeugung des Plasmas (5) feste Mono-, Di-, Oligooder Polymere (4) mittels durch Hochfrequenzenergie ionisierter Edelgase (6) zerstäubt werden.

3. Verfahren nach Anspruch 1 oder 2, **dadurch gekennzeichnet, daß** zur Erzeugung des Plasmas (5) Fluor-Kohlenstoff-Verbindungen, insbesondere Fluorkohlenwasserstoffe, eingesetzt werden.

4. Verfahren nach Anspruch 3, **dadurch gekennzeichnet, daß** zur Erzeugung des Plasmas (5) Mono-, Di-, Oligo- oder Polymere von Tetrafluorethen eingesetzt werden.

5. Verfahren nach Anspruch 1 oder 2, **dadurch gekennzeichnet, daß** zur Erzeugung des Plasmas (5) organische Siliciumverbindungen eingesetzt werden.

6. Verfahren nach Anspruch 5, **dadurch gekennzeichnet, daß** Hexamethyldisiloxan (HMDSO) eingesetzt wird.

7. Verfahren nach Anspruch 5, **dadurch gekennzeichnet, daß** Silicone eingesetzt werden.

**8.** Verfahren nach einem der Ansprüche 1 bis 7, **dadurch gekennzeichnet, daß** die plasmapolymerisierte dünne Schicht (3) in einer Dicke von 100 nm bis 1 µm auf die Polymerelektrolytmembran (1) aufgebracht wird.

**9.** Verfahren nach einem der Ansprüche 1 bis 8, **dadurch gekennzeichnet, daß** die aciden Gruppen während der Plasmapolymerisation in die plasmapolymerisierte dünne Schicht (3) eingelagert werden.

**10.** Verfahren nach einem der Ansprüche 1 bis 9, **dadurch gekennzeichnet, daß** Sulfonsäuregruppen (-SO$_2$-OH) eingelagert werden.

**11.** Verfahren nach einem der Ansprüche 1 bis 10, **dadurch gekennzeichnet, daß** flüssige oder gasförmige, acide Gruppen abspaltende Medien in das Plasma (5) eingebracht werden.

**12.** Verfahren nach Anspruch 11, **dadurch gekennzeichnet, daß** Halogensulfonsäuren eingesetzt werden.

**13.** Verfahren nach einem der Ansprüche 1 bis 10, **dadurch gekennzeichnet, daß** feste, acide Gruppen abspaltende Medien in das Plasma (5) eingebracht werden.

**14.** Verfahren nach Anspruch 13, **dadurch gekennzeichnet, daß** Metallsulfate und/oder -disulfate verwendet werden.

**15.** Verfahren nach Anspruch 13 oder 14, **dadurch gekennzeichnet, daß** Alkalimetallsulfate und/oder -disulfate verwendet werden.

**16.** Verfahren nach Anspruch 14 oder 15, **dadurch gekennzeichnet, daß** die plasmapolymerisierte Schicht (3) zur Umwandlung von (-SO$_2$-OMe)-Gruppen in Sulfonsäuregruppen mit verdünnter Säure behandelt wird.

**17.** Selektiv für Wasser bzw. H$_3$O$^+$-Ionen permeable Polymerelektrolytmembran (1), insbesondere für Methanol-Brennstoffzellen, **gekennzeichnet durch** eine auf eine Polymerelektrolytmembran (2) **durch** Plasmapolymerisation aufgebrachte dünne Schicht (3) aus einem vernetzten Polymer mit in die plasmapolymerisierte dünne Schicht (3) eingelagerten aciden Gruppen.

**18.** Polymerelektroloytmembran nach Anspruch 17, **dadurch gekennzeichnet, daß** die dünne Schicht (3) eine Dicke schen 100 nm und 1 µm aufweist.

**19.** Polymerelektrolytmembran nach Anspruch 17 oder 18, **dadurch gekennzeichnet, daß** die dünne Schicht (3) Fluor-Kohlenstoff-, insbesondere Fluor-Kohlenwasserstoff-Verbindungen, aufweist.

**20.** Polymerelektrolytmembran nach Anspruch 17 oder 18, **dadurch gekennzeichnet, daß** die dünne Schicht (3) Silicone aufweist.

**21.** Polymerelektrolytmembran nach einem der Ansprüche 17 bis 20, **dadurch gekennzeichnet, daß** in die dünne Schicht (3) Sulfonsäuregruppen eingelagert sind.

**Claims**

**1.** Method for producing a polymer electrolyte membrane (1) which is selectively permeable for water or H$_3$O$^+$ ions, especially for methanol fuel cells, **characterised in that** a polymer electrolyte membrane (2) is coated with a thin layer (3) made of a cross-linked polymer by means of plasma polymerisation, and acid groups are incorporated in the plasma-polymerised thin layer (3) in order to increase its proton conductivity.

**2.** Method according to claim 1, **characterised in that** solid mono-, di-, oligo- or polymers (4) are pulverised by means of noble gases (6) which are ionised by high frequency energy in order to produce the plasma (5).

**3.** Method according to claim 1 or 2, **characterised in that** fluorocarbon compounds, especially fluorohydrocarbons, are used in order to produce the plasma (5).

**4.** Method according to claim 3, **characterised in that** mono-, di-, oligo- or polymers of tetrafluoroethene are used in order to produce the plasma (5).

**5.** Method according to claim 1 or 2, **characterised in that** organic silicon compounds are used in order to produce the plasma (5).

**6.** Method according to claim 5, **characterised in that** hexamethyldisiloxane (HMDSO) is used.

**7.** Method according to claim 5, **characterised in that** silicones are used.

**8.** Method according to one of the claims 1 to 7, **characterised in that** the plasma-polymerised, thin layer (3) is applied upon the polymer electrolyte membrane (1) with a thickness of 100 nm to 1 mm.

**9.** Method according to one of the claims 1 to 8, **characterised in that** the acid groups are incorporated

9     **EP 1 020 489 B1**     10

in the plasma-polymerised, thin layer (3) during the plasma polymerisation.

10. Method according to one of the claims 1 to 9, **characterised in that** sulphonic acid groups (-SO$_2$-OH) are incorporated.

11. Method according to one of the claims 1 to 10, **characterised in that** liquid or gaseous media which split off acid groups are introduced into the plasma (5).

12. Method according to claim 11, **characterised in that** halogen sulphonic acids are used.

13. Method according to one of the claims 1 to 10, **characterised in that** solid media which split off acid groups are introduced into the plasma (5).

14. Method according to claim 13, **characterised in that** metal sulphates and/or metal disulphates are used.

15. Method according to claim 13 or 14, **characterised in that** alkali metal sulphates and/or alkali metal disulphates are used.

16. Method according to claim 14 or 15, **characterised in that** the plasma-polymerised layer (3) is treated with dilute acid for the conversion of (-SO$_2$-OMe) groups into sulphonic acid groups.

17. Polymer electrolyte membrane (1) which is selectively permeable for water or H$_3$O$^+$ ions, especially for methanol fuel cells, **characterised by** a thin layer (3) which is applied by means of plasma polymerisation upon a polymer electrolyte membrane (2) and is made of a cross-linked polymer with acid groups incorporated in the plasma-polymerised, thin layer (3).

18. Polymer electrolyte membrane according to claim 17, **characterised in that** the thin layer (3) has a thickness between 100 nm and 1 mm.

19. Polymer electrolyte membrane according to claim 17 or 18, **characterised in that** the thin layer (3) has fluorocarbon compounds, especially fluorohydrocarbon compounds.

20. Polymer electrolyte membrane according to claim 17 or 18, **characterised in that** the thin layer (3) has silicones.

21. Polymer electrolyte membrane according to one of the claims 17 to 20, **characterised in that** sulphonic acid groups are incorporated in the thin layer (3).

## Revendications

1. Procédé de fabrication d'une membrane électrolytique polymère, (1) perméable de manière sélective à l'eau ou aux ions H$_3$O$^+$, notamment pour des piles à combustible au méthanol,
   **caractérisé en ce que**
   l'on revêt une membrane électrolytique polymère (2) d'une mince couche (3) d'un polymère réticulé par polymérisation au plasma et on introduit des groupes acides dans la mince couche (3) polymérisée au plasma pour augmenter sa capacité de conduction protonique.

2. Procédé selon la revendication 1,
   **caractérisé en ce que**
   pour générer le plasma (5) on pulvérise des mono,- di,- oligo, ou polymères (4) solides au moyen de gaz rares (6) ionisés par une énergie à haute fréquence.

3. Procédé selon la revendication 1 ou 2,
   **caractérisé en ce que**
   pour générer le plasma (5) on utilise des composés fluoro-carbonés notamment des hydrocarbures fluorés.

4. Procédé selon la revendication 3,
   **caractérisé en ce que**
   pour générer le plasma (5) on utilise des mono-, di-, oligo- ou polymères du tétrafluorethylène.

5. Procédé selon la revendication 1 ou 2,
   **caractérisé en ce que**
   pour générer le plasma (5) on utilise des composés organo-siliciques.

6. Procédé selon la revendication 5,
   **caractérisé en ce qu'**
   on utilise de l'hexaméthyldisiloxane (HMDSO).

7. Procédé selon la revendication 5,
   **caractérisé en ce qu'**
   on utilise des silicones.

8. Procédé selon l'une des revendications 1 à 7,
   **caractérisé en ce qu'**
   on applique la mince couche (3) polymérisée au plasma sous une épaisseur de 100 nm jusqu'à 1 μm sur la membrane électrolytique polymère (1).

9. Procédé selon l'une des revendications 1 à 8,
   **caractérisé en ce qu'**
   on introduit les groupes acides dans la mince couche (3) polymérisée au plasma au cours de la polymérisation au plasma.

10. Procédé selon l'une des revendications 1 à 9,
    **caractérisé en ce qu'**

on introduit des groupes acide sulfonique (-SO$_2$-OH).

**11.** Procédé selon l'une des revendications 1 à 10, **caractérisé en ce qu'** on introduit dans le plasma (5) des milieux liquides ou gazeux libérant des groupes acides.

**12.** Procédé selon la revendication 11, **caractérisé en ce qu'** on utilise des acides halogénosulfoniques.

**13.** Procédé selon l'une des revendications 1 à 10, **caractérisé en ce qu'** on introduit dans le plasma (5) des milieux solides libérant des groupes acides.

**14.** Procédé selon la revendication 13, **caractérisé en ce qu'** on utilise des sulfates et/ou des disulfates métalliques.

**15.** Procédé selon la revendication 13 ou 14, **caractérisé en ce qu'** on utilise des sulfates et/ou des disulfates de métaux alcalins.

**16.** Procédé selon la revendication 14 ou 15, **caractérisé en ce qu'** on traite la couche (3) polymérisée au plasma avec de l'acide dilué pour convertir des groupes (-SO$_2$-OMe) en groupe acide sulfonique.

**17.** Membrane électrolytique polymère (1) perméable de manière sélective à l'eau ou aux ions H$_3$O$^+$, notamment pour des piles à combustible au méthanol, **caractérisée par** une mince couche (3) en un polymère réticulé dans laquelle sont insérés des groupes acides appliquée sur une membrane électrolytique polymère (2) par polymérisation au plasma.

**18.** Membrane électrolytique polymère selon la revendication 17, **caractérisée en ce que** la mince couche (3) a une épaisseur comprise entre 100 nm et 1 μm.

**19.** Membrane électrolytique polymère selon la revendication 17 ou 18, **caractérisée en ce que** la mince couche (3) contient des composés fluorocarbonés en particulier des hydrocarbures fluorés.

**20.** Membrane électrolytique polymère selon la revendication 17 ou 18, **caractérisée en ce que** la mince couche (b) contient des silicones.

**21.** Membrane électrolytique polymère selon l'une des revendications 17 à 20, **caractérisée en ce que** des groupes acide sulfonique sont intégrés dans la mince couche (3).

Figur 1

Figur 2

Figur 3